# EUROPEAN PATENT APPLICATION

(11) **EP 0 559 121 A1**
(43) Date of publication of application: **08.09.1993**
(21) Application number: 93103242.9
(22) Date of filing: 01.03.1993
(51) Int. Cl.: G06K 15/12, G06K 15/00

(54) **Image forming apparatus and method**

(30) Priority: 03.03.1992 JP 45409/92
(71) Applicant: KABUSHIKI KAISHA TOSHIBA, Kawasaki-shi, Kanagawa-ken 210 (JP)
(72) Inventor: Suzuki, Kazuhisa, c/o Intellectual Property Div., Minato-ku, Tokyo 105 (JP)
(74) Representative: Blumbach, Kramer & Partner

(57) **Abstract**

An image forming apparatus comprising a receiving section (408) receiving image information data from a host apparatus (409), an image forming section (300) for forming an image on a medium (A, P) in response to the image information data received, during a warming-up of the image forming section and before a ready state of the image forming section, a main memory section (403a) for storing the image information data received by the receiving section (408), an additional memory section (403b) for storing the image information data received by the receiving section (408) during the warming-up of the image forming section (300), a signal detecting section (411) for detecting signal which represents completion of the warming-up of the image forming section (300), and an image information developing section (405, 406) for reading out the image information data stored in the additional memory section (403b), developing the data to a bit image and sending the bit image to the image forming section when the signal is received from the signal detecting section (411).

## Description

The present invention relates to an apparatus for forming images on sheets of paper responsive to image information received from an external apparatus. It also relates to an image forming method achieved by this image forming apparatus.

The image forming apparatus includes an image expanding section where image information is received from the external host apparatus and expanded to a bit image, and an image forming section where the bit images is formed as an image on sheets of paper and the image-formed paper sheets are discharged outside the image forming apparatus.

The image forming section has mechanical components such as the engine. Therefore, it cannot become operative immediately after the power source is turned on and it must be warmed up for a certain time period.

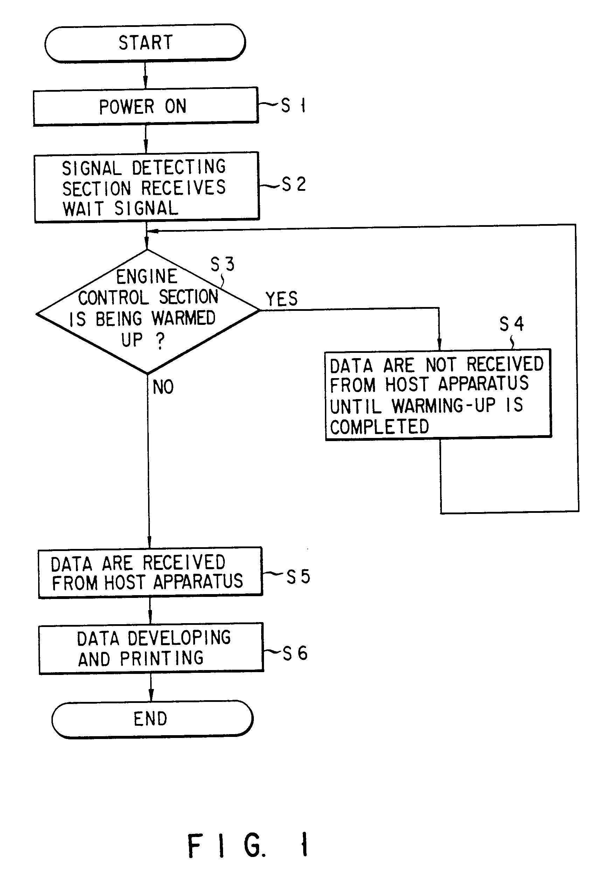

When the image forming section is being warmed up (or the answer at a step S3 is "yes"), wait signal is sent from an engine section to a control section to keep image information not received from the external host apparatus (Step 3), as shown in Fig. 1. After the warming-up of the image forming section is completed, printing-enable signal is sent from the engine section to the control section (Step 5) and when the signal is thus received, the image developing section can develop the image information to conduct printing (Step 6).

In the case of the conventional image forming apparatus, therefore, image information cannot be sent from the external host apparatus to the image developing section at the time when the power source for the engine section is put on because the image forming section must be warmed up. The reception of image information is kept waiting until the warming-up of the image forming section is completed. In short, a considerable waiting time is needed until the image forming section is warmed up.

When image information is sent to the image forming apparatus before the warming-up of the image forming section is completed, "error" is displayed on the external host apparatus and same image information must be again sent after the finish of the warming-up. This is quite disadvantageous.

An object of the present invention is therefore to provide an image forming apparatus capable of receiving image information from the external host apparatus and expanding this image information even when the image forming section is being warmed up.

Another object of the present invention is to provide an image forming method achieved by this image forming apparatus.

According to an aspect of the present invention, there can be provided an image forming apparatus comprising means for receiving image information data from an external apparatus; means which needs warming-up until said image forming means is made in a ready state, for forming an image on a medium in response to the image information data received during the warming-up of said image forming means and before the ready state of said image forming means; means for storing the image information data received by the receiving means during the warming-up of the image forming means; means for detecting a completion of the warming-up of the image forming means; and means for reading out the image information data stored in the storing means, and to send the image information data to the image forming means when the detecting means defects the completion of the warming-up.

According to another aspect of the present invention, there can be provided an image forming method of receiving image information data from an external apparatus, storing them in a main memory means, reading out them successively from the main memory means, developing them to a bit image and forming an image on a medium by an image forming means in response to the bit image developed, said image forming method further comprising receiving the image information data from the external apparatus during the warming-up of the image forming means; storing the image information data thus received in an additional memory means; sending a signal, which represents that the warming-up of the image forming means is completed, to image information developing means; and reading out the image information data stored in the additional memory means in response to the signal received, developing them to a bit image and sending it to the image forming means to form an image on the medium.

The additional memory section can be kept free from wait signal applied from the engine section of the image forming section. This additional memory section is connected to the image information receiving part to store data received from the image information receiving section. Even when the image forming section is being warmed up, therefore, data can be received from the external apparatus.

When wait signal vanishes and warming-up completion signal is detected, image information data are sent from the additional memory section to the image information developing sections. As the result, the image information developing sections develop image information data to image data and send them to the image forming section. An image can be thus formed on a medium.

This invention can be more fully understood from the following detailed description when taken in conjunction with the accompanying drawings, in which:
Fig. 1 is a flow chart showing the conventional image forming method;
Fig. 2 is a vertically-sectioned view showing the inside arrangement of a laser printer to which the present invention has been applied;
Fig. 3 is a block diagram showing engine and printer controllers of the laser printer and an external host apparatus;
Fig. 4 is a block diagram showing the printer controller;
Fig. 5 is a block diagram showing how the laser printer is operated; and
Fig. 6 is a flow chart showing an image forming method achieved by the laser printer according to an embodiment of the present invention.

An embodiment of the present invention will be described with reference to the accompanying drawings. The present invention will be applied to the laser printer in this case to form an image forming apparatus.

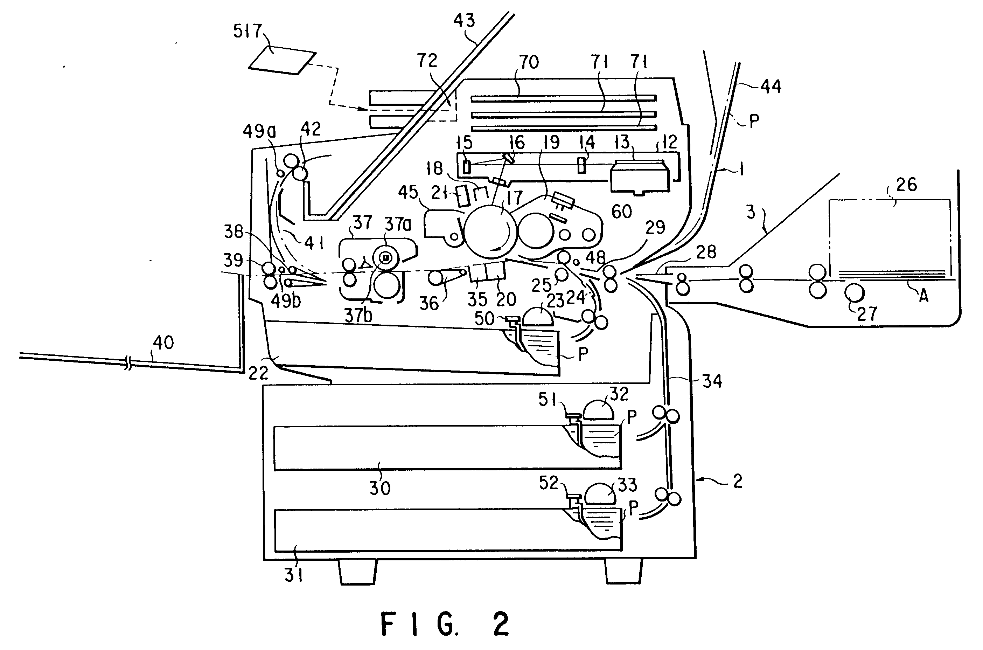

Fig. 2 shows an image forming apparatus including a laser printer 1 and optional components. Connected to the laser printer 1 are such optional components as a multi-cassette feeder 2 for feeding sheets of paper (common paper) P, as printing sheets, into the printer 1 and an envelope feeder 3 for feeding sheets of paper (cardboard) A, thicker than common paper, into the printer 1.

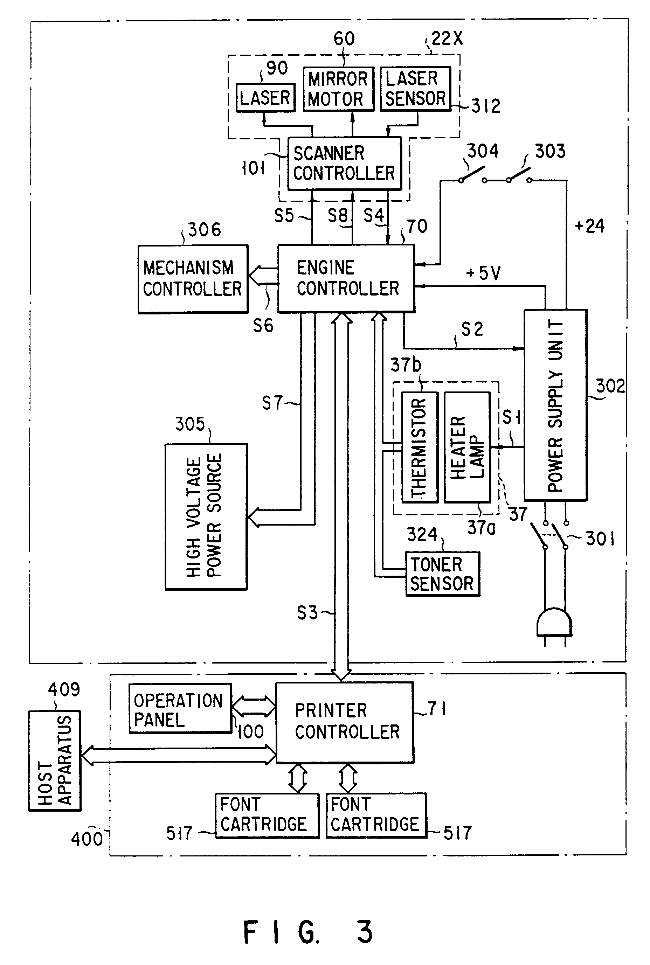

An operation panel 100 is arranged on the top of the laser printer 1. As shown in Fig. 3, the operation panel 100 is connected to a printer controller 71.

Arranged in the laser printer 1 are a laser optical system 12, a photosensitive drum 17, charging, developing, transferring, de-charging, peeling, fixing and cleaning units 18, 19, 20, 21, 35, 37 and 45, which form the process line, and a paper sheet supply cassette 22, a feeding roller 23, a pair of aligning rollers 25, a conveying belt 36, a gate 38 and paired sheet discharging rollers 39 and 42.

The laser optical system 12 comprises a semiconductor laser shooter (not shown) for shooting laser beams, a collimator lens (not shown) for correcting the laser beams shot from the laser shooter to parallel beams, a polygon mirror (or rotary mirror) 13 serving as a rotating body and having an octahedral mirror section for reflecting the laser beams emitted through the collimator lens every scanning line, an f·ϑ lens 14, mirrors 15, 16 and a mirror motor 60 for rotating (or driving) the polygon mirror 13.

Laser beams which are responsive to image signals applied from an external apparatus (or operation panel 100) are imaged on the surface of the photosensitive drum 17 during the image forming operation. More specifically, the photosensitive drum 17 is rotated in a direction shown by an arrow in Fig. 2. While rotating in this direction, it is charged on its surface by the charging unit 18, and exposed by the laser optical system 12, responsive to image signals applied. When the polygon mirror 13 is rotated by the mirror motor 60, the photosensitive drum 17 is scanned from left to right at a certain speed by the laser beams shot from the semiconductor laser shooter through the polygon mirror 13. An electrostatic latent image is thus formed on the surface of the photosensitive drum 17. This electrostatic latent image is made visible when toner is applied to it through the developing unit 19.

On the other hand, paper sheets P which serve as image-formed media are picked up one by one from the sheet supply cassette 22 by the feeding roller 23, and introduced to the paired aligning rollers 25, passing through a sheet guiding passage 24, and then fed into the transfer section by the rollers 25.

Paper sheets P picked up one by one from a sheet supply cassette 30 in the multi-cassette feeder 2 by a feeding roller 32 and guided to the paired aligning rollers 25 through sheet guiding passages 34 and 29; those P picked up one by one from a sheet supply cassette 31 by a feeding roller 33 and guided to the paired aligning rollers 25 through the sheet guiding passage 34 and 29; those A picked up one by one from a stacker 26 in the envelope feeder 3 by a sheet feeding roller 27 and guided to the paired aligning rollers 25 through sheet guiding passages 28 and 29; or those P supplied from a manual sheet supply section 44 and guided to the paired aligning rollers 25 through the sheet guiding passage 29 are fed to the image transfer section in response to a command applied from the external apparatus or operation panel 100.

Paper sheets P or A fed to the image transfer section are closely contacted with the surface of the photosensitive drum 17 one by one and the toner image on the photosensitive drum 17 is transferred to them by the image transfer unit 20. The paper sheet P or A thus image-transferred is peeled off from the photosensitive drum 17 by the peeling unit 35 and fed to the fixing unit 37 by the conveying belt 36. While passing through the fixing unit 37, it is heated by a heat roller 37₁ to heat-fix the transferred-image on it. The heat roller 37₁ houses a heater lamp 37a therein.

Arranged above the laser optical system 12 are an engine control plate provided with the engine controller 70 to control electrical units in the apparatus 1 to achieve the electrophotographing process and plates provided with printer controllers 71 to control the operation of the engine controller 70.

Three printer controller plates can be used maximum to achieve additional functions when lettering styles and kanji words, for example, are increased. When font cartridges 517 are connected to the printer controller plates, functions can be further added. Arranged on left end faces of the printer controller plates are connectors (not shown) through which the plates can be connected to a host apparatus 409 (which will be described later) and which serves as external output units such as the computer and the word processor.

An engine control section 300 will be described with reference to Fig. 3.

Reference numeral 302 represents a power supply unit. When a main switch 301 is put on, power voltages of +5V and +24V are supplied through the power supply unit 302. The power voltage +5V is supplied to the engine controller 70 and further to the printer controller 71 via the engine controller 70. The power voltage +24V is supplied to the engine controller 70 via cover switches 303 and 304. It is then supplied to a scanner controller 101, a high voltage power source 305 and a mechanism controller 306 through the engine controller 70. It is further supplied from the scanner controller 101 to a semiconductor laser 90 and the mirror motor 60 to drive them.

The power supply unit 302 includes therein a heater lamp driver (not shown) of the Zero-cross switch type comprising a photo-Triac coupler and a Triac, for example, to drive the heater lamp 37a in the fixing unit 37. The power voltage +24V is used as a power source to drive an LED on the light-emitting side of the photo-Triac coupler.

When the LED is put on and off in the case of the above-described heater lamp driver, the photo-Triac on the light-emitting side is put on and off at the zero-cross point of an AC power source. The Triac which is a main switch element at a next stage is thus put on and off to connect and disconnect the AC power source S1 to and from the heater lamp 37a. Heater control signal S2 which serves to put on and off the LED on the light-emitting side is supplied from the engine controller 70 to the power supply unit 302 and temperature signal which has been detected by a thermistor 37b in the fixing unit 37 is supplied to the engine controller 70.

As described above, it is arranged in the engine control section 300 that power is supplied to electric circuits through the engine controller 70 and that these electric circuits are therefore controlled by control signals of two values applied from the engine controller 70. The engine control section 300 and a printer control section 400 which will be described later are connected each other by interface signal S3.

It will be described how the printer control section 400 is arranged.

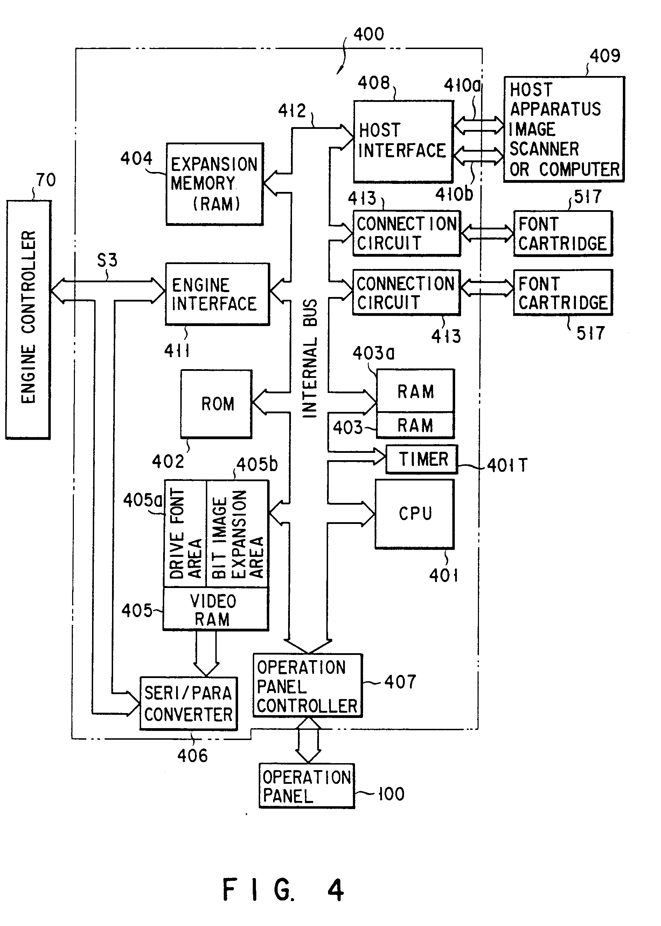

Fig. 4 is a block diagram showing the main portion of the printer control section 400. A CPU 401 is intended to control the whole of the printer control section 400. A timer 401T is connected to the CPU 401 via an internal bus 412 and it is used to control those times during which the CPU 401 conducts its processes. An ROM 402 is intended to store a control program, according to which the CPU 401 is operated. Also stored in the ROM 402 are a specifically-identified secret number which is verified when data now on use are to be changed, paper sheet data including top and left margins and types of paper sheet, message information which is sent to the operator, and fundamental fonts (or bit image data) representing fundamental character patterns.

A RAM 403 is used as a page buffer for temporarily storing image data applied from a host apparatus 409. An expansion memory 404 is of so large capacity type as used in a case where the image data applied from the host apparatus 409 are quite large in quantity like bit map data and they cannot be stored as one page data in the RAM 403.

A video RAM 405 serves to store those image data which have been expanded to a bit image, and outputs of this video RAM 405 are supplied to a seri/para converter 406.

The video RAM 405 comprises a derive font area 405a where derive fonts representing deformed character patterns such as thick, italic and inverted characters of the fundamental character patterns stored in the ROM 402 are stored, and a bit image expansion area 405b where bit image data obtained when the image data in the page buffer of the RAM 403 are expanded by the fundamental fonts stored in the ROM 402 and by the derive fonts stored in the derive font area 405a are stored. These areas 405a and 405b may be formed in the RAM 403.

The seri/para converter 406 serves to convert the image data, which have been expanded to the bit image in the video RAM 405 and which have been received as parallel data, into serial data and send them to the engine controller 70.

A host interface 408 serves to exchange data between the host apparatus 409, which is an electronic computer or image reading unit (or image scanner), and the printer control section 400 through it, and it includes serial and parallel transfer lines 410a and 410b, which can be appropriately selected depending upon kinds of data transferred to and from the host apparatus 409.

An engine interface 411 serves to exchange interface signal S3 between the printer controller 71 and the engine controller 70 through it. Connection circuits 413 serve to disconnect the power source and signal lines from the font cartridges 517 when the cartridges 517 are to be inserted into and pulled out of connectors, so that data stored in the font cartridges 517 can be prevented from being damaged by noises caused when they are inserted into and pulled out of their connectors.

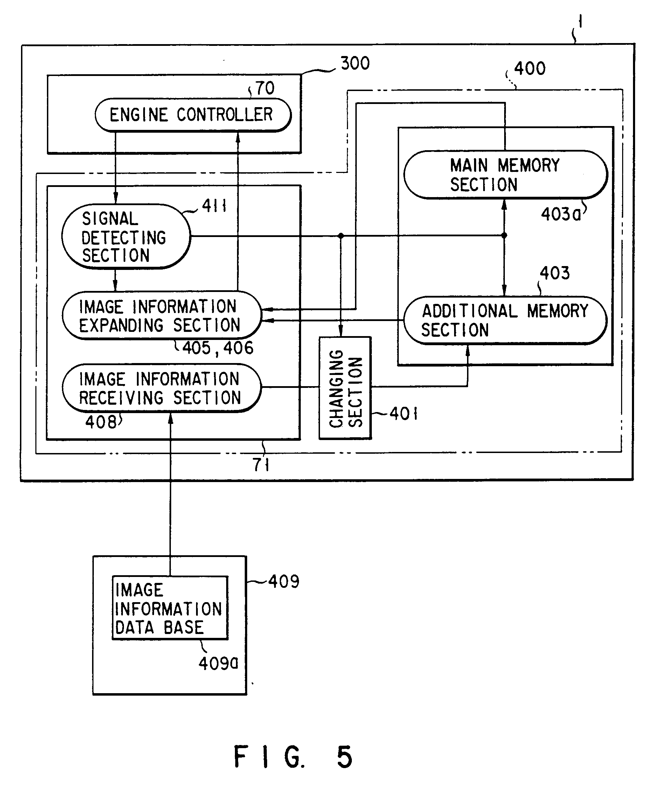

Fig. 5 is a block diagram schematically showing the laser printer and the external apparatus. The laser printer 1 is divided into the printer control section 400 where image information data applied from the external apparatus 409 are received and processed and expanded to the bit image, and the engine control section 300 where the bit image is formed as an image on the paper sheets and these image-formed paper sheets are discharged outside.

The external apparatus 409 is a personal computer provided with an image information data base. It is connected to an image information receiving section 408 at the printer control section 400 of the laser printer 1 to send image information data needed in the data base 409a to the image information receiving section 408.

The image information receiving section 408 is connected to an additional memory section 403b, which is arranged independent of the printer control section 400 in the laser printer 1. The RAM 403 includes two areas comprising this additional memory section 403b and a main memory section 403a.

Further, the additional memory section 403b is connected to image information developing sections 405 and 406 at the printer control section 400. The image information developing sections 405 and 406 serve to develop image information signals applied from the additional memory section 403b to the bit image.

Further, the image information developing sections 405 and 406 are connected to the input of the engine controller 70 to send the bit image thus developed to the engine controller 70.

A signal detecting section 411 is arranged between the engine controller 70 and the image information developing sections 405, 406. This signal detecting section 411 serves to receive wait signal applied from the engine controller 70 and send it to the image information developing section 405 and 406 during the warming-up process. When the wait signal is received, the image information developing sections 405 and 406 are kept waiting not to develop image information signals.

The signal detecting section 411 also serves to receive print-enable signal (or ready signal) applied from the engine controller 70 and send it to the image information developing sections 405 and 406 when the warming-up process is completed. When the ready signal is received, the image information developing sections 405 and 406 are made operative to carry out their image develops.

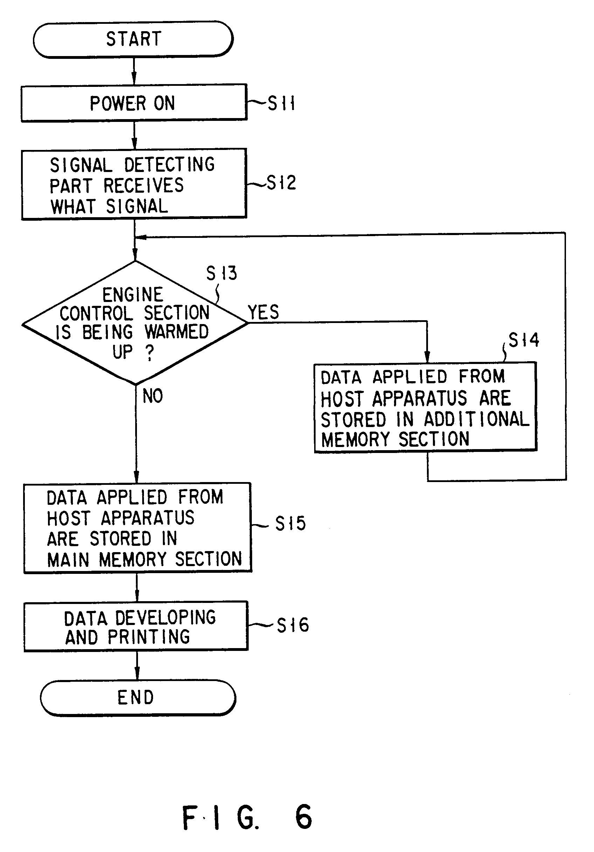

Operations before and after the warming-up process will be described with reference to Fig. 6.

The power source (or power supply unit) for the laser printer 1 is turned on (Step 11). The printer control section 400 is warmed up until the laser printer 1 becomes possible to conduct printing. Wait signal is sent from the printer controller 70 to the signal detecting section 411 during this time period to keep the laser printer 1 waiting not to conduct printing (Step 12). In other words, a considerable time is needed until the heater lamp 37a is heated to a certain temperature.

When the signal detecting section 411 receives the wait signal, the CPU 401 judges that the engine control section 300 is being warmed up (Step 13), and it causes image information data to be stored in the additional memory section 403b (Step 14). The area of the additional memory section 403b is not shielded by the wait signal. This enables data to be called from the additional memory section 403b. The data are successively developed to bit images by the image information developing sections 405 and 406 (Step 16). Further, font data are called from the ROM 402 and the bit images are printed using the font data (Step 16).

When the signal detecting section 411 comes not to receive the wait signal, the CPU 401 judges that the warming-up of the engine control section 300 has been completed (Step 13). The data in the additional memory section 403b is sent by the CPU 401 to the engine control section 300 and the printing is performed on the basis of the data. The CPU 401 changes a portion for storing the data from external host apparatus 409 from the additional memory section 403b to the main memory section 403a. In short, the data sent from the host apparatus are stored in the main memory section 403a (Step 15). The data are successively called from the main memory section 403a and developed to bit images by the image information developing sections 405 and 406. Further, font data are called from the ROM 402 and the bit images are printed using these font data (Step 16).

According to the laser printer 1 which is an embodiment of the present invention, image information data can be received from the external apparatus 409 just after the power source is turned on. In short, the reception of image information data can be conducted without waiting for the image forming section to be warmed up, as seen in the conventional printers.

According to the present invention as described above, even when the printer control section is being warmed up, image information data can be successively sent from the external apparatus to the additional memory part in the image forming apparatus and stored there just after the power source is turned on. This enables the image forming operation to be more quickly started after the warming-up of the printer control section is completed.

When data are sent from the external apparatus during the warming-up of the printer control section in the conventional cases, the message of "error" is displayed on the external apparatus and the transmission of these data must be repeated. This is quite waste of time. In the case of the present invention, however, the message of "error" is not displayed on the external apparatus even if the transmission of data is conducted during the warming-up of the printer control section. This can lead the image forming apparatus or laser printer to an easier use.

## Claims

1. An image forming apparatus, characterized by comprising:
means (408) for receiving image information data from an external apparatus (409);
means (300) for forming an image on a medium (A, P) in response to the image information data received during a warming-up of said image forming means and before a ready state of said image forming means, and said image forming means needs the warming-up until said image forming means is made in the ready state;
means (403) for storing the image information data received by the receiving means (408) during the warming-up of the image forming means (300);
means (411) for detecting a completion of the warming-up of the image forming means (300); and
means (405, 406) for reading out the image information data stored in the storing means (403) to send said the image information data to the image forming means (300) when the detecting means detects the completion of the warming-up.

2. An image forming apparatus according to claim 1, further comprising said storing means (403) includes a main memory section (403a) and an additional memory section (403b), and changing means (401) for changing a portion for storing the image information data received by the receiving means (408) from said additional memory section (403b) to said main memory section (403a) in response to the signal received from the detecting means (411).

3. An image forming apparatus according to claim 1, characterized in that said reading out means develops the image information data to a bit image.

4. An image forming method, characterized by comprising the steps of:
preparing image forming means which needs warming-up until said image forming means is made in a ready state, for forming an image on a medium in response to an image information data received during the warming-up of said image-forming means and before the ready state of said image forming means;
receiving the image information data from an external apparatus (409) during a warming-up of image forming means (300);
storing the image information data thus received in a memory means (403b);
detecting a completion of the warming-up of the image forming means (300);
reading out the image information data stored in the memory means (403b) in response to the signal received;
developing the image information data to a bit image; and
forming an image of a medium corresponding to the bit image developed.

5. A method according to claim 4, characterized by further comprising changing means changes a portion for storing the image information data received from a main memory section of said memory means (403a) to an additional memory section of said memory means (403b) when the completion signal of the warming-up of the image forming means is detected.
